# FASCICULE DE BREVET EUROPEEN

(11) **EP 0 645 003 B1**
(45) Date de publication et mention de la délivrance du brevet: **19.11.1997**
(21) Numéro de dépôt: 94913634.5
(22) Date de dépôt: 11.04.1994
(51) Int. Cl.: G01J 5/20

(54) **DETECTEUR THERMIQUE BOLOMETRIQUE**
THERMISCHER BOLOMETRISCHER DETEKTOR
BOLOMETRIC THERMAL DETECTOR

(30) Priorité: 09.04.1993 FR 9304257
(43) Date de publication de la demande: 29.03.1995
(73) Titulaire: THOMSON-CSF, 75008 Paris (FR)
(72) Inventeur: BUCHY, François, F-92402 Courbevoie Cédex (FR); ROBIN, Philippe, F-94402 Courbevoie Cédex (FR)
(74) Mandataire: Guérin, Michel
(86) Numéro de dépôt international: FR9400401
(87) Numéro de publication internationale: WO9424531

(56) Documents cités:
- WO-A-93/09414
- FR-A- 2 223 840
- GB-A- 2 152 750
- US-A- 4 745 278
- JOURNAL OF ELECTRONIC MATERIALS, vol.4, no.1, Février 1975 pages 91 - 100 S.T.LIU ET AL. 'RARE-EARTH-MODIFIED ... FERROELECTRIC CRYSTALS AND THEIR APPLICATIONS AS INFRARED DETECTORS'
- JOURNAL OF APPLIED PHYSICS, vol.50, no.7, Juillet 1979, NEW YORK US pages 4913 - 4919 A.SHAULOV ET AL. 'DIRECT MEASUREMENT OF PYROELECTRIC FIGURES OF MERIT OF PROPER AND IMPROPER FERROELECTRICS'

## Description

Le domaine de l'invention est celui des détecteurs thermiques et plus précisément celui des détecteurs infrarouge thermiques non refroidis.

Ces détecteurs comportent généralement un élément sensible pouvant être chauffé par un flux de rayonnement dans la bande III (8 à 12 µm), caractéristique de la température et de l'émittivité des corps observés. L'augmentation de température de l'élément sensible se traduit par la variation d'une propriété électrique du matériau, constitutif de l'élément sensible : apparition de charges électriques par effet pyroélectrique, variation de capacité par changement de la constante diélectrique, variation de la résistance d'un matériau semiconducteur.

Un fonctionnement performant de ces détecteurs implique trois conditions principales au niveau du matériau sensible : une faible masse calorifique (donc une mise en oeuvre en couche mince), une bonne isolation thermique de la couche active vis-à-vis du substrat de mesure et surtout une forte sensibilité de l'effet de conversion de l'échauffement en signal électrique.

Par rapport aux premières générations à tube de type pyricon, l'évolution majeure a été la réalisation de détecteurs monolithiques intégrant une matrice d'éléments sensibles connectés directement à un circuit de multiplexage en silicium de type CCD ou CMOS. Des imageurs infrarouge fonctionnant à température ambiante sont aujourd'hui réalisés en faisant appel à des matériaux pyroélectriques ou ferroélectriques nouveaux (comme les polymères fluorés ou les pérovskites de plomb, ...).

FR-A-2 223 840 divulgue un détecteur thermique pyroélectrique comprenant un matériau ferroélectrique qui est utilisé dans un domaine où la polarisation spontanée du cristal est fonction de la température.

Certains composés tels que le dioxyde de vanadium sont apparus comme particulièrement intéressants, en raison de leur grande sensibilité due à de fortes variations de résistivité. Dans le cas de ces matériaux, on réalise généralement des mesures sous courant constant pour lire des variations de tension, représentatives des rayonnements infrarouge enregistrés. En effet des composés tels que les semiconducteurs ou le dioxyde de vanadium présentent des coefficients de température négatif (diminution de la résistance avec une augmentation de température). La mesure à courant constant s'impose car avec une mesure à tension constante, on obtient avec des composés à coefficient de température négatif une augmentation de courant, et donc une élévation de température au sein de la couche sensible due à l'effet Joule. Ces matériaux ne peuvent ainsi avoir une température régulée lors de l'enregistrement de rayonnements infrarouge, sous tension constante. Or il peut être particulièrement avantageux de procéder à une lecture à tension constante, car l'encombrement des circuits électroniques à implanter sur le silicium est généralement plus faible et les fonctionnements des dispositifs électroniques utilisés, souvent moins bruiteux.

C'est pourquoi, l'invention propose un détecteur thermique dans lequel la couche de matériau sensible possède un coefficient de température positif. Ainsi, lors d'une mesure sous tension constante, l'élévation de la résistance avec la température génère une diminution de courant, permettant de minimiser les pertes par effet Joule et ainsi stabiliser la température de la couche sensible. Plus précisément l'invention a pour objet un détecteur thermique comprenant une couche de matériau sensible à la chaleur, caractérisé en ce que le matériau sensible comprend un matériau ferroélectrique (CTP) dopé, présentant une faible résistance, une température de transition ferroélectrique/paraélectrique voisine de la température ambiante et une forte augmentation de résistance avec la température, au voisinage de la transition ferroélectrique/paraélectrique, lors de la détection thermique.

Avec ce type de matériau, on est en mesure d'optimiser la valeur de la résistance et le coefficient de température dR/dT (R étant la résistance de la couche de matériau sensible, T étant la température). On cherche en effet à minimiser la valeur de la résistance et à obtenir un fort coefficient de température. La faible valeur de résistance nécessaire à une bonne sensibilité peut être assurée par le dopage, permettant ainsi l'obtention d'une phase ferroélectrique de faible résistance.

Le matériau sensible peut être une céramique ferroélectrique dopée

La céramique ferroélectrique peut avantageusement être du titanate de baryum BaTiO₃ ou un composé de type BaTiO₃ - SrTiO₃.

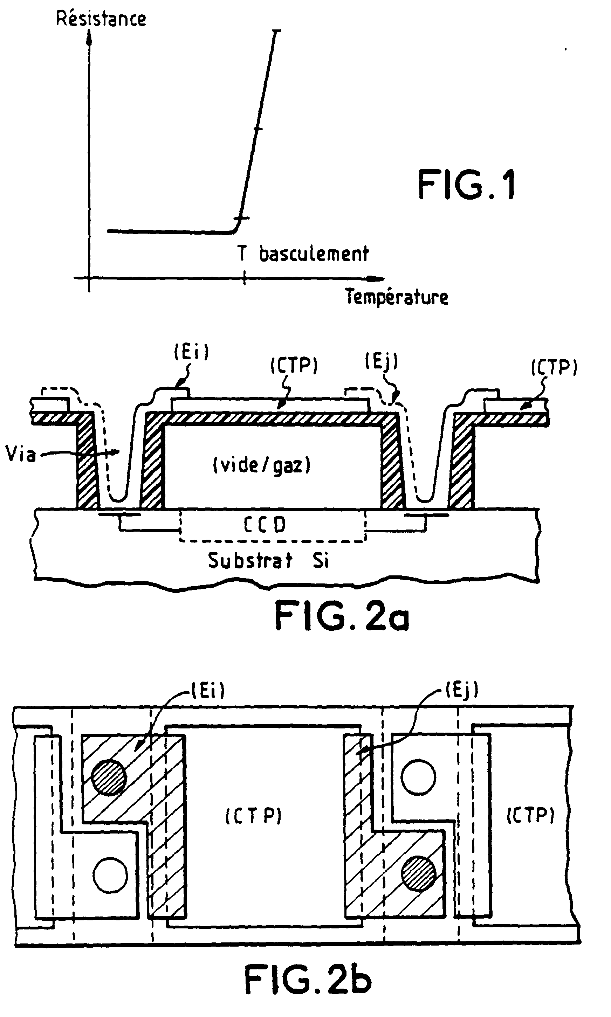

En utilisant un composé tel que BaTiO₃ - SrTiO₃ avec des taux variables de SrTiO₃ on est en mesure d'influencer la température de basculement correspondant au changement de pente entre la phase ferroélectrique et la phase paraélectrique, dans la courbe résistance en fonction de la température, schématisée à la figure 1. On peut ainsi avantageusement, avec une céramique contenant environ 30 % de SrTiO₃ obtenir un détecteur sensible fonctionnant à la température ambiante. En effet dans ce cas précis, la température de basculement se situe vers 20°C.

Le dopage permettant d'ajuster la valeur de la résistance peut être assuré par des composés tels que l'antimoine, l'yttrium ou bien les terres rares (lanthane, néodyne, samarium, dysprosium, terbium ...). Le pourcentage de dopant peut typiquement se situer entre 0,1 % et 1 %.

Le matériau sensible peut être un matériau composite comprenant une couche de matériau ferroélectrique dopé et une couche semiconductrice.

Typiquement, il peut s'agir de l'association d'une couche de ferroélectrique dopé et d'une couche d'arséniure de gallium ou de silicium amorphe.

Le détecteur thermique selon l'invention peut comprendre un substrat comportant un circuit de multiplexage, une microstructure en couche mince isolante thermiquement et une segmentation matricielle au niveau de la couche sensible, de manière à définir des éléments d'image ou pixels.

La microstructure isolante peut avantageusement être constituée de microponts en matériau isolant, de type nitrure de silicium.

Chaque micropont peut ainsi supporter un élément unitaire de matériau sensible, en céramique ferroélectrique. Les électrodes nécessaires à la mesure électrique peuvent avantageusement être de type électrodes planaires disposées à la surface des éléments unitaires de céramique. Elles peuvent également être de type électrodes transversales situées sur les flancs d'un élément sensible tout en recouvrant partiellement la face supérieure dudit élément.

L'invention sera mieux comprise et d'autres avantages apparaîtront à la lecture de la description qui va suivre, donnée à titre non limitatif, et des figures annexées parmi lesquelles :
- la figure 1 schématise l'évolution de la résistance avec la température dans une céramique ferroélectrique utilisée comme matériau sensible dans un détecteur thermique selon l'invention ;
- la figure 2 illustre un exemple de détecteur thermique selon l'invention, comportant une matrice de pixels image ;
   * les figures 2a et 2b illustrent cet exemple de détecteur dans deux plans différents.
- la figure 3 illustre des exemples de réalisation de microstructure isolante;
   * la figure 3a illustre une technique de sous gravure de silicium
   * la figure 3b illustre une technique utilisant le dépôt d'une couche sacrificielle.
- la figure 4 illustre un exemple de configuration d'électrodes de mesure, dans un détecteur thermique selon l'invention ;
- la figure 5 illustre un autre exemple de configuration d'électrodes de mesure, dans un détecteur thermique selon l'invention ;
- la figure 6 illustre un exemple de détecteur selon l'invention dans lequel l'élément sensible est constitué d'une couche de matériau ferroélectrique dopé et d'une couche semiconductrice.

Le détecteur thermique selon l'invention comprend une couche sensible de céramique ferroélectrique à coefficient de température positif et élevé. L'effet de variation de résistance en fonction de la température est lié à la présence d'interfaces dans ce type de matériau : notamment de joints de grain dans une microstructure céramique. On assiste ainsi au voisinage de la transition ferroélectrique/paraélectrique à une forte augmentation de la résistance avec la température comme l'illustre la figure 1. Ce taux d'accroissement peut typiquement atteindre 100 % par degré et ce sur un intervalle limité de températures. La température de basculement définie à la figure 1 est fixée par la synthèse du matériau et peut typiquement être comprise entre - 100°C et + 300°C.

Il peut être ainsi particulièrement intéressant de disposer de détecteurs thermiques fonctionnant à la température ambiante sans aucun système de refroidissement.

Dans un détecteur thermique selon l'invention les valeurs de résistivité dans l'état passant sont fonction du niveau de dopage introduit dans le matériau sensible. Typiquement dans le cas du titanate de baryum on peut obtenir des résistivités inférieures à environ 100 Ω.cm.

Pour influencer le coefficient de température, il est également possible d'introduire un autre type de dopant pouvant être du manganèse et ce dans des pourcentages très faibles, inférieurs à environ 0,1 %.

Le détecteur thermique infrarouge peut comprendre une architecture permettant de faire de l'imagerie infrarouge. Il peut s'agir d'une architecture de type matriciel comportant N x M points images élémentaires (pixels) où N et M sont respectivement le nombre de lignes et de colonnes.

Cette segmentation matricielle peut se retrouver à deux niveaux comme l'illustre la figure 2 :
- au niveau du plan de la couche sensible à l'échauffement et au niveau de la mesure électrique de chaque pixel ;
- au niveau du plan de mesure qui peut être un circuit de multiplexage réalisé dans un substrat de silicium.

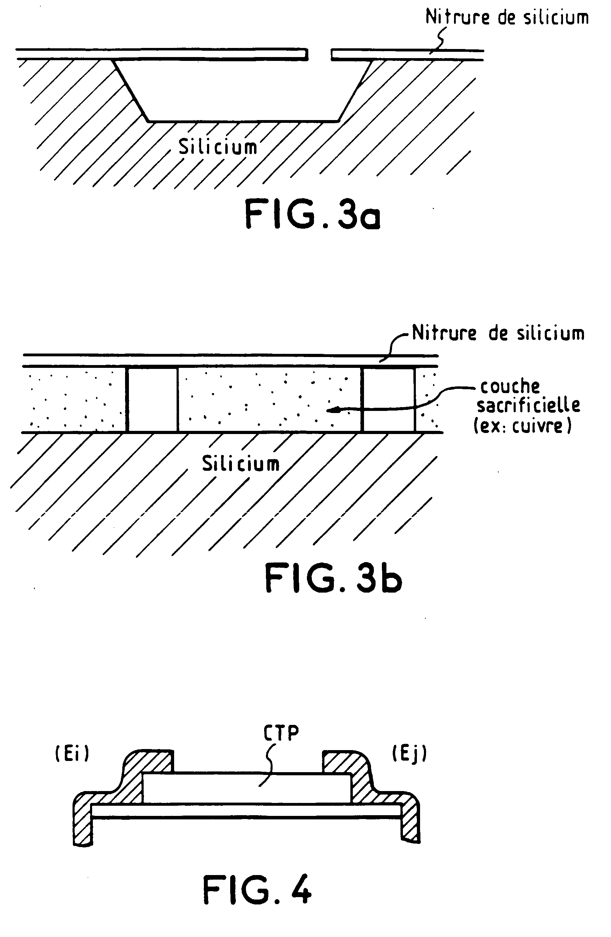

Pour obtenir une isolation thermique efficace de la matrice de senseurs par rapport au substrat de silicium, le détecteur selon l'invention comprend une microstructure en couche mince. Cette microstructure peut être élaborée de différentes façons : par exemple par des techniques de sous gravure de silicium, laissant une couche mince support isolante comme l'illustre la figure 3a. La couche mince support isolante peut être typiquement du nitrure de silicium. Une autre technique possible peut consister à déposer une couche sacrificielle qui sera attaquée chimiquement (comme l'illustre la figure 3b). Cette couche sacrificielle peut être typiquement en cuivre.
- Les couches minces des éléments sensibles de type matériau céramique à coefficient de température positif, sont ensuite déposées sur ces micropoints à l'aide de techniques de dépôt, connues pour ce type de matériau : pulvérisation cathodique, ablation laser, procédé sol-gel, ...

Une étape de gravure permet de séparer physiquement les éléments sensibles afin que leurs résistance puissent être lues de façon indépendante.

Pour assurer la lecture des informations, deux géométries d'électrodes peuvent être mises en oeuvre :
- une géométrie d'électrodes transversales sur les deux flancs des éléments actifs ;
- une géométrie d'électrodes planaires sur les surfaces inférieure et supérieure des éléments actifs.

Ces types d'électrodes de capteur thermique selon l'invention, ainsi réalisé, peuvent être connectées à l'étage d'entrée du circuit de lecture sous chaque pixel.

Le détecteur thermique selon l'invention, ainsi élaboré, peut avantageusement être encapsulé sous vide ou sous un autre gaz tel que le xénon, pour gagner en efficacité de découplage thermique. Le boîtier ainsi fabriqué comprend alors une fenêtre de transmission en bande m.

### Réalisation d'éléments sensibles à coefficient de température positif

Divers composés, ferroélectriques au voisinage de la température ambiante, peuvent être utilisés mais une réalisation préférentielle sera basée sur une solution solide de titanate de baryum et de titanate de strontium.

Les constituants de départ pour la synthèse comprennent outre les éléments de la solution solide, un ou plusieurs des ajouts mentionnés plus haut : ex. 0,4 % en proportion atomique d'oxyde d'yttrium pour rendre le composé semiconducteur ; et 0,04 % d'oxyde de manganèse pour contrôler le coefficient de température de la résistance.

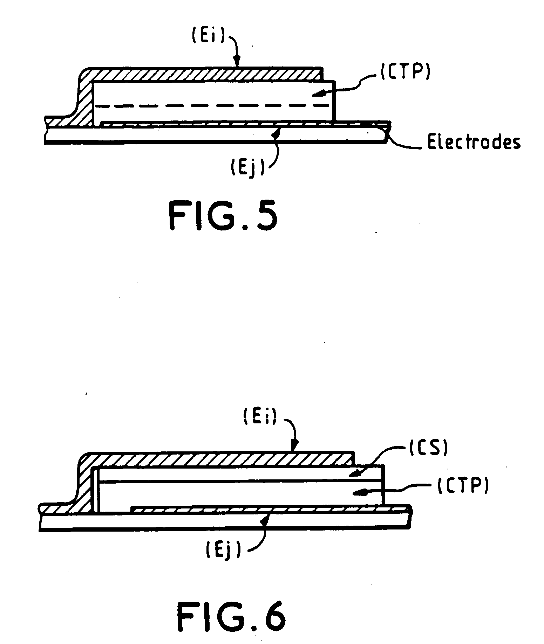

Les structures suivantes peuvent être mises en oeuvre pour contrôler la valeur de la résistance et la valeur de la pente de la résistance en fonction de la température :
- dépôt d'une couche mince polycristalline dont la microstructure sera contrôlée par les paramètres de dépôt de façon à obtenir une taille moyenne des grains nettement inférieure à la dimension du pixel de façon à intégrer entre les électrodes plusieurs joints de grain. Des électrodes planaires sont associées à cette structure (voir figure 4) ;
- dépôt d'une structure de type multicouche dont la figure 5 illustre une réalisation simple définissant une barrière de potentiel favorable à l'obtention d'une couche de matériau (CTP) : dépôt d'une première couche ferroélectrique dopée par exemple par sol-gel suivi soit d'un traitement en atmosphère oxydante soit d'un dépôt d'un élément accepteur : Mn, Fe, .., puis dépôt d'une deuxième couche ferroélectrique dans les mêmes conditions que la première. Deux électrodes transverses sont ensuite déposées sur les deux faces (voir figure 5) ;
- dépôt d'une couche mince ferroélectrique dopée (CTP) comme précédemment suivi du dépôt d'une couche mince semiconductrice (C_{S}) par exemple en arséniure de gallium ou silicium amorphe et métallisation des deux faces comme précédemment (figure 6) pour définir les électrodes (Ei) et (Ej).

## Revendications

1. Détecteur thermique comprenant une couche de matériau sensible à la chaleur, caractérisé en ce que le matériau sensible comprend un matériau ferroélectrique, dopé, présentant une faible résistance, une température de transition ferroélectrique/paraélectrique voisine de la température ambiante et une forte augmentation de résistance avec la température, au voisinage de la transition ferroélectrique/paraélectrique, lors de la détection thermique.

2. Détecteur thermique selon la revendication 1, caractérisé en ce que le matériau sensible est une céramique ferroélectrique dopée.

3. Détecteur thermique selon la revendication 2, caractérisé en ce que le matériau sensible comprend du titanate de baryum.

4. Détecteur thermique selon la revendication 3, caractérisé en ce que le matériau sensible comprend du titanate de strontium.

5. Détecteur thermique selon la revendication 1, caractérisé en ce que le matériau sensible comprend une couche de matériau ferroélectrique dopé et une couche semiconductrice.

6. Détecteur thermique selon l'une des revendications 1 à 5, caractérisé en ce que le dopage est assuré par un matériau de type antimoine ou yttrium.

7. Détecteur thermique selon l'une des revendications 1 à 5, caractérisé en ce que le dopage est assuré par une terre rare.

8. Détecteur thermique selon l'une des revendications 6 ou 7, caractérisé en ce que le pourcentage de dopant est compris entre environ 0,1 % et environ 1 %.

9. Détecteur thermique selon l'une des revendications 1 à 8, caractérisé en ce qu'il comporte un circuit de multiplexage, une microstructure en couche mince isolante thermiquement et une segmentation matricielle au niveau de la couche sensible, de manière à définir des éléments d'image.

10. Détecteur thermique selon la revendication 9, caractérisé en ce que la microstructure isolante est constituée de microponts en matériau isolant.

11. Détecteur thermique selon la revendication 10, caractérisé en ce que le matériau isolant est du nitrure de silicium.

12. Détecteur thermique selon l'une des revendications 10 ou 11, caractérisé en ce que chaque micropont supporte un élément unitaire de matériau sensible en céramique ferroélectrique.

13. Détecteur thermique selon la revendication 12, caractérisé en ce que des électrodes planaires sont disposées à la surface inférieure et à la surface supérieure des éléments unitaires.

14. Détecteur thermique selon la revendication 12, caractérisé en ce que des électrodes sont situées sur les flancs des éléments sensibles et recouvrent également partiellement la face supérieure desdits éléments.

## Patentansprüche

1. Wärmedetektor mit einer Schicht aus einem wärmeempfindlichen Material, dadurch gekennzeichnet, daß das wärmeempfindliche Material ein dotiertes ferroelektrisches Material mit einem geringen Widerstand, mit einer Übergangstemperatur zwischen dem ferroelektrischen und dem paraelektrischen Zustand in der Nähe der Umgebungstemperatur und mit einer starken Erhöhung des Widerstands abhängig von der Temperatur in der Nähe des Übergangs vom ferroelektrischen zum paraelektrischen Zustand bei der Wärmemessung enthält.

2. Wärmedetektor nach Anspruch 1, dadurch gekennzeichnet, daß das wärmeempfindliche Material eine dotierte ferroelektrische Keramik ist.

3. Wärmedetektor nach Anspruch 2, dadurch gekennzeichnet, daß das wärmeempfindliche Material Bariumtitanat enthält.

4. Wärmedetektor nach Anspruch 3, dadurch gekennzeichnet, daß das wärmeempfindliche Material Strontiumtitanat enthält.

5. Wärmedetektor nach Anspruch 1, dadurch gekennzeichnet, daß das wärmeempfindliche Material eine Schicht aus einem dotierten ferroelektrischen Material und eine Halbleiterschicht enthält.

6. Wärmedetektor nach einem der Ansprüche 1 bis 5, dadurch gekennzeichnet, daß die Dotierung mit einem Material des Typs Antimon oder Yttrium erfolgt.

7. Wärmedetektor nach einem der Ansprüche 1 bis 5, dadurch gekennzeichnet, daß für die Dotierung eine seltene Erde verwendet wird.

8. Wärmedetektor nach einem der Ansprüche 6 oder 7, dadurch gekennzeichnet, daß die Dotierungsrate zwischen etwa 0,1% und 1% liegt.

9. Wärmedetektor nach einem der Ansprüche 1 bis 8, dadurch gekennzeichnet, daß er eine Multiplexierschaltung, eine wärmeisolierende Dünnschicht-Mikrostruktur und eine matrixartige Unterteilung in Höhe der wärmeempfindlichen Schicht aufweist, so daß Bildelemente definiert werden.

10. Wärmedetektor nach Anspruch 9, dadurch gekennzeichnet, daß die isolierende Mikrostruktur von Mikrobrücken aus isolierendem Material gebildet wird.

11. Wärmedetektor nach Anspruch 10, dadurch gekennzeichnet, daß das isolierende Material Siliziumnitrid ist.

12. Wärmedetektor nach einem der Ansprüche 10 oder 11, dadurch gekennzeichnet, daß jede Mikrobrücke ein Einheitselement aus wärmeempfindlichem Material in Form einer ferroelektrischen Keramik trägt.

13. Wärmedetektor nach Anspruch 12, dadurch gekennzeichnet, daß Planarelektroden auf der Unter- und auf der Oberseite der Einheitselemente vorhanden sind.

14. Wärmedetektor nach Anspruch 12, dadurch gekennzeichnet, daß Elektroden auf den Flanken der wärmeempfindlichen Elemente angebracht sind und auch teilweise auf die Oberseite der Elemente übergreifen.

## Claims

1. Thermal detector comprising a layer of heat-sensitive material, characterized in that the sensitive material comprises a doped ferroelectric material exhibiting a low resistance, a ferroelectric/paraelectric transition temperature close to ambient temperature and a pronounced rise in resistance with temperature, in the vicinity of the ferroelectric/paraelectric transition, during thermal detection.

2. Thermal detector according to Claim 1, characterized in that the sensitive material is a doped ferroelectric ceramic.

3. Thermal detector according to Claim 2, characterized in that the sensitive material comprises barium titanate.

4. Thermal detector according to Claim 3, characterized in that the sensitive material comprises strontium titanate.

5. Thermal detector according to Claim 1, characterized in that the sensitive material comprises a layer of doped ferroelectric material and a semiconductor layer.

6. Thermal detector according to one of Claims 1 to 5, characterized in that the doping is provided by a material of the antimony or yttrium type.

7. Thermal detector according to one of Claims 1 to 5, characterized in that the doping is provided by a rare earth.

8. Thermal detector according to one of Claims 6 or 7, characterized in that the percentage of dopant is between approximately 0.1% and approximately 1%.

9. Thermal detector according to one of Claims 1 to 8, characterized in that it includes a multiplexing circuit, a thermally insulating thin-film microstructure and a matrix segmentation at the level of the sensitive layer, so as to define picture elements.

10. Thermal detector according to Claim 9, characterized in that the insulating microstructure consists of microbridges made of insulating material.

11. Thermal detector according to Claim 10, characterized in that the insulating material is silicon nitride.

12. Thermal detector according to one of Claims 10 or 11, characterized in that each microbridge supports an individual element of sensitive material made of ferroelectric ceramic.

13. Thermal detector according to Claim 12, characterized in that planar electrodes are arranged on the lower surface and on the upper surface of the individual elements.

14. Thermal detector according to Claim 12, characterized in that electrodes are located on the side walls of the sensitive elements and also partially cover the upper face of the said elements
